# EUROPEAN PATENT APPLICATION

(11) **EP 4 300 677 A1**
(43) Date of publication of application: **03.01.2024**
(21) Application number: 22759637.6
(22) Date of filing: 22.02.2022
(51) Int. Cl.: H01M 50/204, H01M 50/342

(54) **BATTERY PACK**

(30) Priority: 25.02.2021 JP 2021029197
(71) Applicant: Panasonic Energy Co., Ltd., Osaka 570-8511 (JP)
(72) Inventor: TAKEDA, Kensaku, Kadoma-shi, Osaka 571-0057 (JP); WAKABAYASHI, Takeaki, Kadoma-shi, Osaka 571-0057 (JP)
(74) Representative: Novagraaf International SA
(86) International application number: PCT/JP2022/007202
(87) International publication number: WO 2022/181601

(57) **Abstract**

A flame due to abnormality is prevented from leaking to an outside. A battery pack includes a first inorganic plate disposed at an opening of a housing and spaced apart from a battery holder by a first gap (d1), and a second inorganic plate spaced apart from the first inorganic plate by a second gap (d2). The first inorganic plate has first through-holes opened in a predetermined first pattern. The second inorganic plate has second through-holes opened in a prescribed second pattern. The housing includes an inner rib projecting from an inner surface of the opening of the housing. The inner rib is provided between the first and second inorganic plates to form the second gap (d2). The first and second inorganic plates are positioned such that the second through-holes are deviated from the first through-holes to prevent an inside of the housing from being viewed from an outside of the housing through the second through-holes.

## Description

### TECHNICAL FIELD

The present invention relates to a battery pack.

### BACKGROUND ART

A battery pack including a lot of secondary battery cells connected in series or parallel to one another is used as a power supply for a portable electric device, such as an electric cleaner or an electric power tool, or a backup power supply for server, home, office, or factory power supply device for stationary storage, and is further used in a driving power supply of a power-assisted bicycle, a driving power supply of an electric scooter, an electric cart, or a vehicle such as a hybrid vehicle or an electric automatic vehicle. Lithium-ion secondary batteries are often used as the secondary battery cells used in such a battery pack. The lithium-ion secondary batteries may lead to an unsafe event involving smoke or fire due to abnormality such as penetration of a bolt during a collision. Suppose an unsafe event occurs in the battery pack, fire from the secondary battery cells inside the battery pack may be released to the outside of the battery pack.

In order to prevent such an event, it is required to prevent a flame from leaking to the outside even if an abnormality occurs in the battery pack. Measures are conventionally taken with a structure in which refractory fibers are wound around a core pack of the secondary battery cells. However, this configuration may provide a problem that, particularly in a small-sized battery pack including an outer housing with a size equal to or less than a certain value, a pressure of gas ejected from the cells may not be absorbed in the pack, which causes a flame to leak to the outside of the battery pack.

### Citation List

### Patent Literature

PTL 1: WO2020/153017

### SUMMARY OF THE INVENTION

An object of the invention is to provide a battery pack preventing occurrence of an event of leaking of a flame to the outside during an abnormality.

To achieve the above object, a battery pack according to a first aspect of the invention includes: a battery holder including a plurality of secondary battery cells each including a safety valve; a housing accommodating the battery holder therein, the housing having one or more opening surfaces, each opening surface of the one or more opening surfaces having an opening partially provided therein; a first inorganic plate disposed at the opening of the housing and spaced apart from the battery holder by a first gap between the first inorganic plate and a surface of the battery holder; and a second inorganic plate disposed at the opening of the housing and separated from the first inorganic plate by a second gap between the first inorganic plate and the second inorganic plate. The first inorganic plate has a plurality of first through-holes therein in a predetermined first pattern. The second inorganic plate has a plurality of second through-holes therein in a predetermined second pattern. The housing includes an inner rib projecting from an inner surface of the opening. The inner rib is positioned between the first inorganic plate and the second inorganic plate to form the second gap and positions the first inorganic plate and the second inorganic plate such that the second through-holes deviate from the first through-holes to prevent an inside of the housing from being viewed from an outside of the hosing through the second through-holes. In the above configuration, the inner rib of the housing forms the second gap between the first inorganic plate and the second inorganic plate which are positioned in a thickness direction. The first inorganic plate and the second inorganic plate are positioned such that the first through-holes do not overlap the second through-holes in a planar direction. Even if an event occurs in which the safety valve of the secondary battery cell is opened and a flame occurs due to some abnormality, the above configuration reduces the intensity of the flame and eliminate the heat by constituting a path having different movement directions from the first gap to the first through-holes, from the first through-holes to the second gap, and from the second gap to the second through-holes, and to prevent the occurrence of an event in which the flame generated from the secondary battery cell is directly released to the outside of the battery pack, thereby enhancing safety.

In a battery pack according to a second aspect of the invention, in the above configuration, the inner rib has a first step portion provided in a surface of the inner rib facing the battery holder and a second step portion provided in an opposite surface of the inner rib opposite to the surface of the surface of the inner rib. The first step portion of the inner rib contacts an end surface of the first inorganic plate to position the first inorganic plate on a plane parallel to the each opening surface of the housing. The second step portion of the inner rib contacts an end surface of the second inorganic plate to position the second inorganic plate on a plane parallel to the each opening surface of the housing. In the above configuration, the first inorganic plate and the second inorganic plate are easily positioned in a plane direction of the opening surface by the inner rib of the housing, and it is possible to bend the movement path of the flame and ensure the preventing effect by arranging the first through-holes and the second through-holes in a shifted manner.

In a battery pack according to a third aspect of the invention, in any one of the above configurations, the second step portion deviates from the first step portion in the each opening surface of the housing.

In a battery pack according to a fourth aspect of the invention, in any one of the above configurations, the second step portion deviates from the first step portion by a first deviating amount in a first direction along the each opening surface of the housing and a second deviating amount in a second direction along the each opening surface of the housing, the second direction being perpendicular to the first direction.

In a battery pack according to a fifth aspect of the invention, in any one of the above configurations, the first deviating amount is equal to the second deviating amount.

In a battery pack according to a sixth aspect of the invention, in any one of the above configurations, the battery holder includes a plurality of protrusions provided at an edge of the opening of the housing, the plurality of protrusions protruding from a surface of the battery holder toward the inner rib of the housing. End surfaces of the plurality of protrusions contact a periphery of a surface of the first inorganic plate to form the first gap between the surface of the battery holder and the first inorganic plate, the end surfaces of the protrusions facing the inner rib to form first holding spaces holding a periphery of the first inorganic plate therein. In the above configuration, the first inorganic plate is easily positioned in the thickness direction with the inner rib and the protrusions.

In the battery pack according to a seventh aspect of the invention, in any one of the above configurations, the plurality of protrusions protrude to face the each opening surface of the housing and have linear shapes extending in parallel to upper and lower sides of the opening.

In a battery pack according to an eighth aspect of the invention, in any one of the above configurations, the second inorganic plate is made of material identical to material of the first inorganic plate. In the above configuration, the same inorganic plates having a lot of through-holes formed in a predetermined pattern deviate from each other. This configuration provides a flame extinction effect and reduces a cost and improve workability during assembly by common components.

In a battery pack according to a ninth aspect of the invention, in any one of the above configurations, the first inorganic plate has a plurality of first fixing holes provided therein for fixing the first inorganic plate to the housing. The second inorganic plate has a plurality of second fixing holes provided therein for fixing the second inorganic plate to the housing. The first inorganic plate and the second inorganic plate are fixed to the housing with fixing elements passing through the first fixing holes and the second fixing holes. The first fixing holes of the first inorganic plate are arranged such that positions of the first fixing holes coincide with positions of the second fixing holes of the second inorganic plate when the first inorganic plate is rotated by 180°. In the above configuration, the first inorganic plate and the second inorganic plate deviates from each other at the opening surface, and the first through-holes do not overlap the second through-holes while the first fixing holes and the second fixing holes are required to be opened at overlapping positions to cause the fixing elements, such as screws or pins, to pass through the first inorganic plate and the second inorganic plate which overlap each other, and common inorganic plates cannot be used. Therefore, by providing the first through-holes in advance at positions coinciding with those of the second through-holes in an inverted state where the first inorganic plate is inverted so that the first inorganic plate can be used as the second inorganic plate in the inverted state, the first fixing holes and the second fixing holes can coincide with each other while using the common inorganic plates to positionally displace the first through-holes and the second through-holes.

In a battery pack according to a tenth aspect of the invention, in any one of the above configurations, the one or more opening surfaces of the housing comprise main surfaces of the housing opposite to each other, and the first inorganic plate and the second inorganic plate are provided at the each opening surface of the housing. In the above configuration, by discharging gas from both sides of the battery pack when the safety valve is opened, it is possible to ensure a gas discharge capacity per unit time and avoid the interior of the battery pack from coming into a high-pressure state.

In a battery pack according to an eleventh aspect of the invention, in any one of the above configurations, intervals between the first through-holes are two times or more and ten times or less an inner diameter of the first through-holes, and intervals between the second through-holes are two times or more and ten times or less an inner diameter of the second through-holes.

In a battery pack according to a twelfth aspect of the invention, in any one of the above configurations, the first through-holes and the second through-holes have diameters ranging from 0.5 mm to 2 mm.

In a battery pack according to a thirteenth aspect of the invention, in any one of the above configurations, the first inorganic plate and the second inorganic plate are made of metal plates.

### BRIEF DESCRIPTION OF DRAWINGS

FIG. 1 is a perspective view of a battery pack according to an exemplary embodiment of the present invention.
FIG. 2 is an exploded perspective view of the battery pack shown in FIG. 1.
FIG. 3 is an exploded perspective view of the battery holder shown in FIG. 2.
FIG. 4 is a cross-sectional view of the battery pack taken along a line IV-IV shown in FIG. 1.
FIG. 5 is a cross-sectional view of the battery pack taken along a line V-V shown in FIG. 1.
FIG. 6 is a cross-sectional perspective view of the battery pack taken along a line VI-VI shown in FIG. 1.

### DESCRIPTION OF EMBODIMENTS

Embodiments of the invention will be described below with reference to the drawings. The embodiments described below are examples for embodying a technical idea of the invention, and the invention is not limited to the following. The present specification does not specify members described in the claims as members in the embodiments. In particular, dimensions, materials, shapes, relative arrangements, and the like of components to be described in the embodiments are not intended to limit the scope of the invention unless particularly specified, and are merely illustrative examples. Sizes, positional relations, and the like of the members shown in the drawings may be exaggerated to clarify the description. In the following description, the same names and reference numerals denote the same or similar members, and a detailed description thereof is omitted as appropriate. Regarding each element constituting the invention, an aspect may be implemented in which a plurality of elements are constituted by the same member and the plurality of elements are shared by one member, or conversely, functions of one member may be assigned and implemented by a plurality of members.

The battery pack according to the invention used as a power supply for a portable electric device such as an electric cleaner or an electric power tool, or a backup power supply for server, home, office, or factory power supply device for stationary storage, and is further used in a driving power supply of a power-assisted bicycle, a driving power supply of an electric scooter, an electric cart, or a vehicle such as a hybrid vehicle or an electric automatic vehicle. A battery pack used as the power supply for a portable electric device will be described as an embodiment according to the invention below.

### Exemplary Embodiment 1

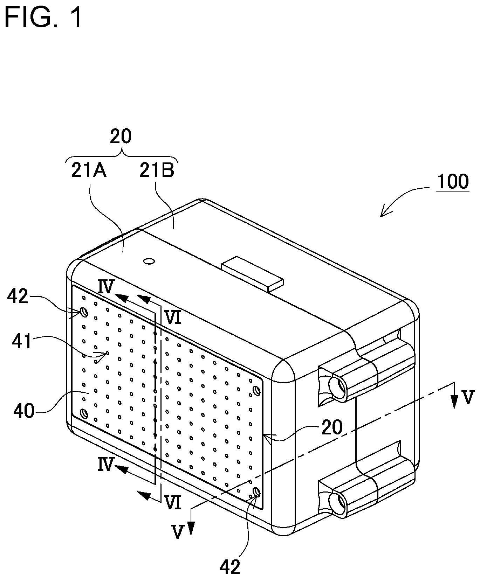

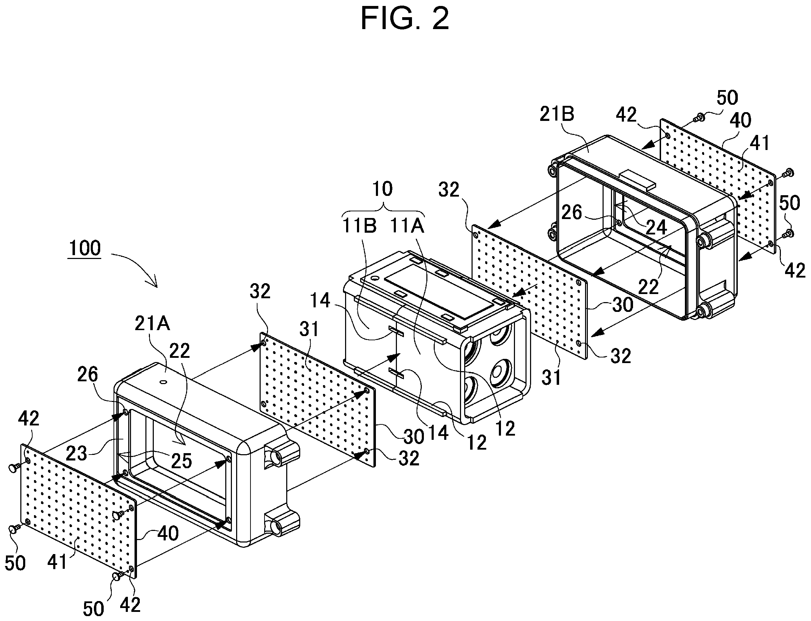

FIG. 1 is an external perspective view of battery pack 100 according to Exemplary Embodiment 1 of the present invention. FIG. 2 is an exploded perspective view of battery pack 100. Battery pack 100 shown in the figures includes battery holder 10, housing 20, first inorganic plates 30, and second inorganic plates 40. Housing 20 accommodates battery holder 10 therein. Housing 20 has one or more opening surfaces partially opening. In the example shown in FIG. 2, the opening surfaces are two opposing surfaces of housing 20, that is, left and right surfaces of housing 20 having a box shape in the figures. First inorganic plate 30 and second inorganic plate 40 overlap each other at each of the opening surfaces. First inorganic plate 30 and second inorganic plate 40 are fixed to housing 20 with fixing elements 50. First inorganic plate 30 has first through-holes 31 provided therein. Second inorganic plate 40 has second through-holes 41 provided therein. First through-holes 31 deviate from second through-holes 41. In other words, any one of openings of first through-holes 31 do not overlap any one of openings of second through-holes 41. An inside of battery pack 100 is prevented from being viewed from an outside of battery pack 100 through second through-holes 41. The inorganic plates provided at one surface of the housing and the through-holes in the inorganic plates deviating from one each other effectively prevent flame from directly leaking to the outside of the battery pack even if one of secondary battery cells accommodated in the battery pack fires.

### Battery Holder 10

An outer shape of battery holder 10 is smaller than an inner shape of housing 20 to be accommodated inside housing 20. Protrusions 12 are provided on a surface of battery holder 10. Protrusions 12 protrude from the surface of battery holder 10 toward an inner surface of housing 20 in a state where battery holder 10 is accommodated in housing 20. In the example shown in FIG. 2, a pair of protrusions 12 parallel to each other extend along an upper end and a lower end of opening 22 of housing 20. Protrusions 12 are formed unitarily with battery holder 10. Slits 14 are formed between the pair of protrusions 12.

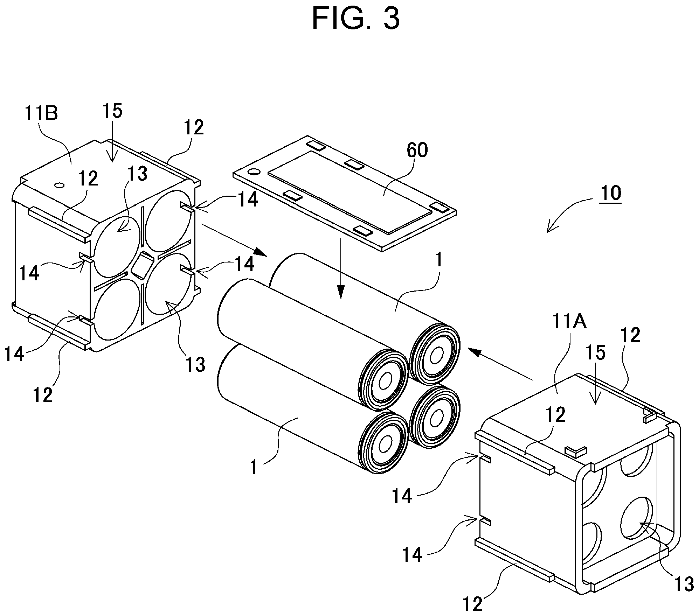

FIG. 3 is an exploded perspective view of battery holder 10. Battery holder 10 holds secondary battery cells 1 and substrate 60. Battery holder 10 with secondary battery cells 1 and substrate 60 constitutes a core pack. Substrate 60 is placed on and fixed to a surface of battery holder 10. Battery holder 10 holds secondary battery cells 1. Battery holder 10 is divided into two sub-holders 11A and 11B which sandwich secondary battery cells 1 in a longitudinal direction of the cells and hold secondary battery cells 1. Sub-holders 11A and 11B form a cylindrical accommodating space 13 that accommodates each secondary battery cell 1. In the example, four secondary battery cells 1 are stacked and held in a posture of two rows by two columns. The number of the secondary battery cells and the manner of stacking are not limited to this configuration, and three or less, or five or more secondary battery cells may be held. The invention is not limited to two stages, and the secondary battery cells may be stacked in one stage, that is, all the secondary battery cells may be arranged on the same surface, or three or more stages. Other than the matrix arrangement, the secondary battery cells may be alternately arranged in a staggered manner among the stages. For example, the thickness of the battery holder may be reduced by setting the accommodating space to two stages and offsetting centers of cylindrical shapes in the accommodating space in the upper and lower stages. Battery holder 10 is made of material, such as polycarbonate ABC resin, with high insulation and heat resistance.

### Secondary Battery Cell 1

Secondary battery cell 1 is a cylindrical secondary battery cell having an outer can with a cylindrical shape. The cylindrical secondary battery cell has electrode surfaces on both end surfaces thereof. One electrode surface includes a safety valve. The safety valve is configured to open when an internal pressure in the outer can rise to release gas inside. The safety valve is often provided closer to a positive electrode of the cell, but in the invention, a position where the safety valve is to be provided is not limited to be closer to the positive electrode, and may be another position, for example, closer to a negative electrode of the cell. Battery holder 10 has slits 14 provided therein to release the gas discharged from the safety valve to the outside of battery holder 10 when the safety valve opens.

A cylindrical lithium-ion secondary battery is suitably used as secondary battery cell 1. However, in the battery pack according to the invention, the secondary battery cell is not specified as the cylindrical battery or the lithium-ion secondary battery. As the secondary battery cell, all rechargeable batteries, for example, a nickel-metal hydride battery, a nickel-oxide battery, and the like can be used.

### Lead Plate

A lead plate is fixed to an end surface of secondary battery cell 1. Secondary battery cells 1 are connected in series or parallel to one another via the lead plate. The lead plate is made of a metal plate and is welded to secondary battery cells 1. A lead positioning guide along an outer shape of the lead plate is formed on an inner surface of battery holder 10 to position the lead plate at a predetermined position. The lead plate may be closer to an outer surface of the battery holder than to an inner surface of the battery holder. In this configuration, after the secondary battery cell is inserted into the accommodating space of the battery holder, the lead plate is fixed to the electrode surface of the secondary battery cell exposed from the battery holder. An output of the core pack including secondary battery cells 1 connected in series or parallel to one another via the lead plates is thus output from battery pack 100.

An upper surface of battery holder 10 is used as mounting surface 15 on which substrate 60 is mounted. A frame holding substrate 60 may be formed on mounting surface 15. Alternatively, a substrate holder holding a substrate may be separately provided.

### Substrate 60

Substrate 60 has electronic circuits mounted thereon. The electronic circuits may be a voltage detection circuit that detects a total potential or an intermediate potential of a battery assembly in which secondary battery cells 1 are connected in series or parallel to one another, a control circuit that controls charging and discharging, and a safety circuit. Substrate 60 has a rectangular shape.

### Housing 20

Housing 20 accommodating battery holder 10 has a box shape. In the example shown in FIG. 1, housing 20 is divided into two sub-cases 21A and 21B to sandwich battery holder 10 from left and right to accommodate battery holder 10. The direction in which sub-cases 21A and 21B are divided perpendicularly crosses a direction in which battery holder 10 is divided into sub-holders 11A and 11B, thereby enhancing resistance to impact. Sub-cases 21A and 21B are made of material with high insulating properties, for example, a resin such as polycarbonate or ABS.

### Inner Rib 23

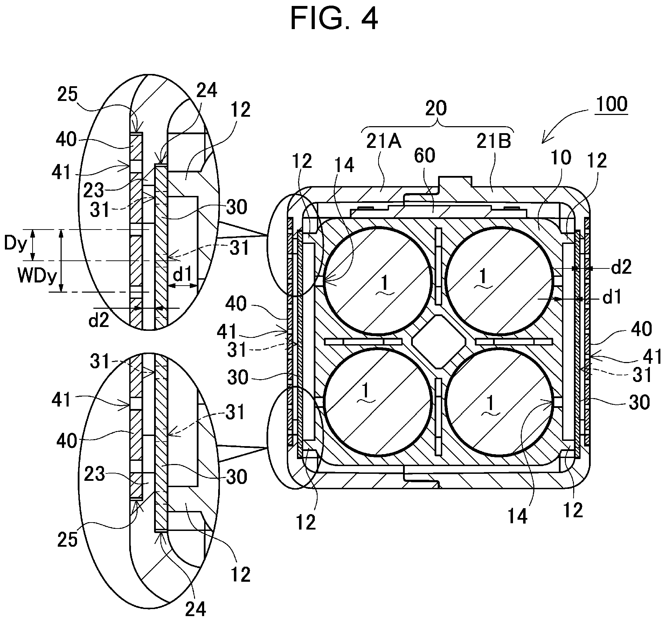

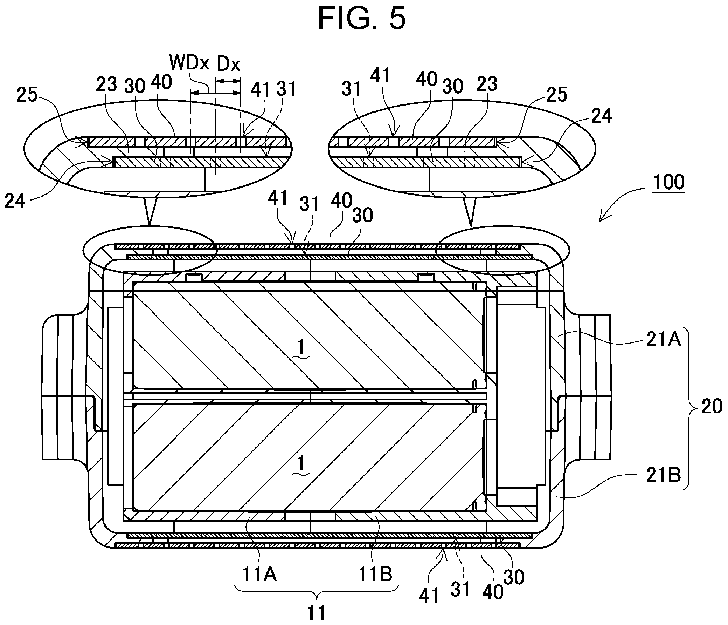

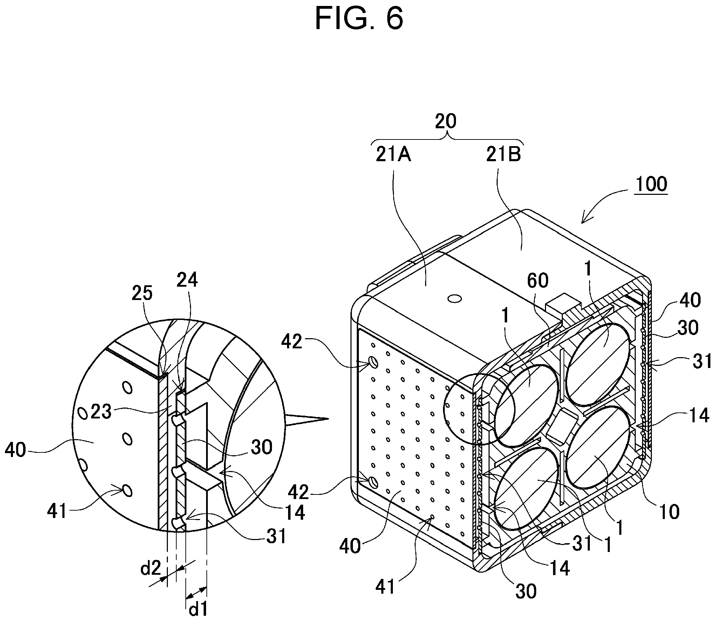

Housing 20 has opposite side surfaces (right and left sides in FIG. 1) which are opening surfaces opening. Inner rib 23 is provided on an inner surface of each of the opening surfaces. First inorganic plate 30 and second inorganic plate 40 are disposed at the opening surface. As shown in the cross-sectional views shown in FIGS. 4 and 5 and the cross-sectional perspective view shown in FIG. 6, first inorganic plate 30 and second inorganic plate 40 are placed on inner rib 23 provided between the inorganic plates. Second gap d2 having a thickness corresponding to the thickness of inner rib 23 is formed between first inorganic plate 30 and second inorganic plate 40.

### Protrusion 12

On the other hand, as described above, protrusions 12 are provide on a surface of battery holder 10. Protrusions 12 protrude toward inner rib 23 provided at an end edge of opening 22 of housing 20. A periphery of first inorganic plate 30 is sandwiched and held between inner rib 23 and each of end surfaces of protrusions 12. As shown in FIGS. 4 and 6, first gap d1 corresponding to the height of each protrusion 12 is formed between the surface of battery holder 10 and first inorganic plate 30.

First inorganic plate 30 is thus disposed on an inner surface of inner rib 23, and second inorganic plate 40 is disposed on an outer surface of inner rib 23. A relative positions of first inorganic plate 30 and second inorganic plate 40 in the thickness direction is determined by inner rib 23. The relative positions of first inorganic plate 30 and battery holder 10 in the thickness direction is determined by protrusions 12.

### First Inorganic Plate 30

First inorganic plate 30 and second inorganic plate 40 are disposed in opening 22 of housing 20. Protrusions 12 allows first inorganic plate 30 to be spaced apart from battery holder 10. First gap d1 is provided between first inorganic plate 30 and the surface of battery holder 10. First inorganic plate 30 has first through-holes 31 therein opened in a predetermined first pattern. First through-hole 31 preferably has a circular shape. However, first through-hole 31 may have a polygonal shape, such as a hexagonal shape or an octagonal shape. The predetermined first pattern is in a matrix form in the example shown in FIG. 1. Here, vertical and horizontal intervals of adjacent thorough-holes out of first through-holes 31 are substantially equal to each other. First inorganic plate 30 may be a plate made of material having sufficient strength and heat resistance, for example, a metal plate made of aluminum or the like, or made of a mineral material such as mica (isinglass). In particular, from a viewpoint of thermal conductivity, durability, ease of processing, and the like, first inorganic plate 30 and second inorganic plate 40 are made of metal plates.

Each first through-hole 31 has an opening area to avoid break of battery pack 100 due to an increase in a pressure inside battery pack 100 while weakening momentums of high-temperature and high-pressure gas, flame, and the like to be ejected when the safety valve of secondary battery cells 1 is opened and lowering the temperature to prevent the gas, the flame, and the like from being directly released to the outside of battery pack 100 at a time. However, when the opening area of each first through-hole 31 is increased, the flame is likely to leak. Therefore, by increasing the number of first through-holes 31 while reducing the opening area of each first through-hole 31, a total opening area is increased, the discharge amount per unit time is secured, and occurrence of an event of discharge of the high-temperature and high-pressure gas or flame at a time is avoided. In the example shown in FIG. 1, the inner diameter of each first through-hole 31 ranges from 0.5 mm to 2 mm, preferably about 1 mm. Interval WDy between first through-holes 31 in a vertical direction is preferably two times or more and ten times or less the inner diameter of the through-hole. In this way, by increasing the interval between first through-holes 31, second through-holes 41 can be easily disposed therebetween.

### Second Inorganic Plate 40

Inner rib 23 allows second inorganic plate 40 to be spaced apart from first inorganic plate 30. Inner rib 23 disposed between second inorganic plate 40 and first inorganic plate 30 provides second gap d2 between second inorganic plate 40 and first inorganic plate 30. Second inorganic plate 40 has second through-holes 41 therein opened in a predetermined second pattern. Similarly to first through-hole 31, second through-hole 41 preferably has a circular shape. The predetermined second pattern is also in a matrix form. Second inorganic plate 40 may be formed separately from first inorganic plate 30, and preferably is the same member. This configuration provides an advantageous effect that a manufacturing cost can be reduced and workability during assembly can be improved by common components.

First through-holes 31 of first inorganic plate 30 deviate from second through-holes 41 of second inorganic plate 40 so that the opening of the through-holes do not overlap each other. Inner rib 23 thus positions first inorganic plate 30 and second inorganic plate 40 such that first through-holes 31 deviate from second through-holes 41. Enlarged cross-sectional views of main parts shown in FIG. 4 are obtained by cutting along positions of second through-holes 41, and indicate first through-holes 31 by broken lines. On the other hand, enlarged cross-sectional perspective views of main parts shown in FIG. 5 are obtained by cutting along positions of first through-holes 31, and indicate second through-holes 41 by broken lines. As shown in the figures, inner rib 23 of housing 20 forms second gap d2 between first inorganic plate 30 and second inorganic plate 40 which are positioned in the thickness direction, and first inorganic plate 30 and second inorganic plate 40 are positioned such that first through-holes 31 do not overlap second through-holes 41 in a planar direction. Thereby, even if the safety valve is opened due to some abnormality in secondary battery cells 1, a flame is prevented from leaking to the outside. That is, the flame or the high-pressure gas that moves from first gap d1 to second gap d2 through first through-holes 31 is blocked by second inorganic plate 40 to be prevented from being discharged and cannot be discharged to the outside as it is, but moves in a bent direction. That is, such a path having different moving directions, that is, a path from first gap d1 to second gap d2 through first through-holes 31, then moving to other positions in second gap d2 and reaching second through-holes 41 enhances safety by weakening momentums, eliminating the heat, and preventing a flame generated by secondary battery cells 1 from being directly released to the outside of battery pack 100. Since second inorganic plate 40 has higher strength and thermal conductivity than a plate material made of resin, it is possible to block flame and high-pressure gas that just pass through first through-holes 31. Since first inorganic plate 30 is also made of metal, high thermal capacity and thermal conductivity of first inorganic plate 30 and second inorganic plate 40 contribute to lowering the temperature of the flame and the high-pressure gas.

In order to allow first through-holes 31 to thus deviate from second through-holes 41, as shown in the enlarged views of the main parts shown in FIG. 4, the inner rib has first step portion 24 formed on a surface of the inner rib facing battery holder 10 and second step portion 25 formed on an opposite surface the inner rib. First step portion 24 and the end surface of protrusion 12 constitute a first holding space for holding a periphery of first inorganic plate 30. First step portion 24 contacts the periphery of first inorganic plate 30, the periphery of first inorganic plate 30 is held in the first holding space, and first inorganic plate 30 is positioned in a plane parallel to the opening surface. Second step portion 25 contacts a periphery of second inorganic plate 40, second inorganic plate 40 is positioned in a plane parallel to the opening surface. First inorganic plate 30 and second inorganic plate 40 are thus easily positioned in a plane direction of the opening surface by inner rib 23 of housing 20.

Second step portion 25 deviates in the opening surface from first step portion 24. Specifically, second step portion 25 is displaced by a first deviating amount in a first direction with respect to first step portion 24. The first direction is, for example, an up-down direction or a Y direction. In the example shown in FIG. 4, as shown in the enlarged views of the main parts, second step portion 25 is disposed above first step portion 24 by first deviating amount Dy. In the example, interval WDy between first through-holes 31 in the vertical direction is equal to interval WDy between second through-holes 41 in the vertical direction. In this condition, first deviating amount Dy is preferably 1/2 of interval WDy between first through-holes 31 in the vertical direction. This configuration positions second through-holes 41 at a middle between first through-holes 31 to secure a distance between first through-hole 31 and second through-hole 41 as long as possible and increase a moving distance of the high-pressure gas and the flame discharged from the safety valve, contributing to weakening the momentums of the high-pressure gas and the flame and lowering the temperature.

Second step portion 25 preferably deviates not only in the first direction but also in a second direction perpendicular to the first direction. The second direction is, for example, a left-right direction or an X direction. In the example of the horizontal cross-sectional view shown in FIG. 5, as shown in the enlarged views of the main parts, second step portion 25 deviates in a horizontal direction (a left direction in the drawing) by second deviating amount Dx from first step portion 24. In the example, interval WDx between first through-holes 31 in a lateral direction, that is, the horizontal direction is equal to interval WDx between second through-holes 41 in the horizontal direction. In addition to this condition, second deviating amount Dx is preferably 1/2 of interval WDx between second through-holes 41 in the horizontal direction. More preferably, second deviating amount Dx is equal to first deviating amount Dy. In particular, the first pattern in which first through-holes 31 preferably coincides with the second pattern in which second through-holes 41 are provided. Further, vertical intervals WDx of adjacent through-holes out of first through-holes 31 and second through-holes 41 is preferably equal to horizontal intervals WDy of the adjacent through-holes out of first through-holes 31 and second through-holes 41. This configuration allows the vertical and horizontal intervals of first through-holes 31 and second through-holes 41 to be equal to each other, thereby avoiding the high-pressure gas from being concentrated on a part of the through-holes during the discharge of the high-pressure gas, and to discharge the high-pressure gas substantially uniform, increasing a discharge efficiency, and enhancing safety.

### Fixing Element 50

First inorganic plate 30 and second inorganic plate 40 are fixed to housing 20 with fixing elements 50. Housing 20 has housing-fixing holes 26 therein through which fixing elements 50 are inserted. In the example shown in FIG. 2, inner rib 23 has housing-fixing holes 26 therein. Fixing elements 50 may be implemented by, e.g., screws, bolts, or rivets. First inorganic plate 30 has first fixing holes 32 therein for fixing first inorganic plate 30 to housing 20. In the example shown in FIG. 2, first fixing holes 32 are opened at four corners of first inorganic plate 30. Similarly, second inorganic plate 40 has second fixing holes 42 therein for fixing second inorganic plate 40 to housing 20. In the example shown FIG. 2, second fixing holes 42 are opened at four corners of second inorganic plate 40. First inorganic plate 30 and second inorganic plate 40 are fixed to housing 20 with fixing elements 50 passing through first fixing holes 32 and second fixing holes 42.

As described above, first inorganic plate 30 and second inorganic plate 40 are fixed such that first through-holes 31 deviate from second through-holes 41. On the other hand, in the case that first inorganic plate 30 and second inorganic plate 40 are fixed with common fixing elements 50 instead of being individually fixed, first fixing holes 32 coincide with second fixing holes 42 while first inorganic plate 30 overlaps second inorganic plate 40 apart from first inorganic plate 30. In the case that first inorganic plate 30 and second inorganic plate 40 are individually designed, it is sufficient to open the through-holes and the fixing holes at required positions. On the other hand, when first inorganic plate 30 and second inorganic plate 40 are constituted by a common inorganic plate, first fixing holes 32 coincide with second fixing holes 42 while first through-holes 31 deviate from second through-holes 41 in a state where first inorganic plate 30 deviate from second inorganic plate 40. Therefore, the fixing holes are not provided at bilaterally symmetrical positions on a plane of the inorganic plate, but are provided at positions at which the fixing holes of the second inorganic plate coincide with the fixing holes of the first inorganic plate when the second inorganic plate is inverted. In the example shown FIG. 2, second inorganic plate 40 coincides with first inorganic plate 30 having a horizontally long rectangular shape rotated by 180°. Instead of the rotation by 180°, the first fixing holes of the first inorganic plate may be arranged such that the positions of the first fixing holes coincide with the positions of the second fixing holes of the second inorganic plate in a state where front-back inversion and rotation are combined. Alternatively, when the first inorganic plate has a rectangular shape, the first inorganic plate may be disposed such that the positions of the first fixing holes coincide with the positions of the second fixing holes of the second inorganic plate when the first inorganic plate is rotated by 90°. In this way, by uniformly providing first fixing holes 32 at the four corners, or making the positions of first fixing holes 32 coincide with those of second fixing holes 42 by rotation or inversion instead of line-symmetric or point-symmetric positions, the fixing holes of second through-holes 41 coincide with the fixing holes of first through-holes 31 while first through-holes 31 deviate from second through-holes 41 while using the common inorganic plate. The common inorganic plate provides an advantageous effect in terms of cost of raw material, workability during assembly, and the like.

### INDUSTRIAL APPLICABILITY

A battery pack according to the present invention is suitably used as a power supply of a portable electric device such as an electric cleaner or an electric power tool. The invention can be appropriately used for applications such as a power supply device for a movable body such as a power-assisted bicycle or an electric cart.

### REFERENCE MARKS IN THE DRAWINGS

- 100: battery pack
- 1: secondary battery cell
- 10: battery holder
- 11A, 11B: sub-holder
- 12: protrusion
- 13: accommodating space
- 14: slit
- 15: mounting surface
- 20: housing
- 21A, 21B: sub-case
- 22: opening
- 23: inner rib
- 24: first step portion
- 25: second step portion
- 26: housing-fixing hole
- 30: first inorganic plate
- 31: first through-hole
- 32: first fixing hole
- 40: second inorganic plate
- 41: second through-hole
- 42: second fixing hole
- 50: fixing element
- 60: substrate
- d1: first gap
- d2: second gap
- WDy: interval between through-holes in vertical direction
- WDx: interval between through-holes in horizontal direction
- Dy: first deviating amount
- Dx: second deviating amount

## Claims

1. A battery pack comprising:
a battery holder including a plurality of secondary battery cells each including a safety valve;
a housing accommodating the battery holder therein, the housing having one or more opening surfaces, each opening surface of the one or more opening surfaces having an opening partially provided therein;
a first inorganic plate disposed at the opening of the housing and spaced apart from the battery holder by a first gap between the first inorganic plate and a surface of the battery holder; and
a second inorganic plate disposed at the opening of the housing and separated from the first inorganic plate by a second gap between the first inorganic plate and the second inorganic plate, wherein
the first inorganic plate has a plurality of first through-holes therein in a predetermined first pattern,
the second inorganic plate has a plurality of second through-holes therein in a predetermined second pattern,
the housing includes an inner rib projecting from an inner surface of the opening, and
the inner rib is positioned between the first inorganic plate and the second inorganic plate to form the second gap and positions the first inorganic plate and the second inorganic plate such that the second through-holes deviate from the first through-holes to prevent an inside of the housing from being viewed from an outside of the hosing through the second through-holes.

2. The battery pack according to claim 1, wherein
the inner rib has a first step portion provided in a surface of the inner rib facing the battery holder and a second step portion provided in an opposite surface of the inner rib opposite to the surface of the surface of the inner rib,
the first step portion of the inner rib contacts an end surface of the first inorganic plate to position the first inorganic plate on a plane parallel to the each opening surface of the housing, and
the second step portion of the inner rib contacts an end surface of the second inorganic plate to position the second inorganic plate on a plane parallel to the each opening surface of the housing.

3. The battery pack according to claim 2, wherein the second step portion deviates from the first step portion in the each opening surface of the housing.

4. The battery pack according to claim 3, wherein the second step portion deviates from the first step portion by a first deviating amount in a first direction along the each opening surface of the housing and a second deviating amount in a second direction along the each opening surface of the housing, the second direction being perpendicular to the first direction.

5. The battery pack according to claim 4, wherein the first deviating amount is equal to the second deviating amount.

6. The battery pack according to any one of claims 1 to 5, wherein
the battery holder includes a plurality of protrusions provided at an edge of the opening of the housing, the plurality of protrusions protruding from a surface of the battery holder toward the inner rib of the housing, and
end surfaces of the plurality of protrusions contact a periphery of a surface of the first inorganic plate to form the first gap between the surface of the battery holder and the first inorganic plate, the end surfaces of the protrusions facing the inner rib to form first holding spaces holding a periphery of the first inorganic plate therein.

7. The battery pack according to claim 6, wherein the plurality of protrusions protrude to face the each opening surface of the housing and have linear shapes extending in parallel to upper and lower sides of the opening.

8. The battery pack according to any one of claims 1 to 7, wherein the second inorganic plate is made of material identical to material of the first inorganic plate.

9. The battery pack according to claim 8, wherein
the first inorganic plate has a plurality of first fixing holes provided therein for fixing the first inorganic plate to the housing,
the second inorganic plate has a plurality of second fixing holes provided therein for fixing the second inorganic plate to the housing,
the first inorganic plate and the second inorganic plate are fixed to the housing with fixing elements passing through the first fixing holes and the second fixing holes, and
the first fixing holes of the first inorganic plate are arranged such that positions of the first fixing holes coincide with positions of the second fixing holes of the second inorganic plate when the first inorganic plate is rotated by 180°.

10. The battery pack according to any one of claims 1 to 9, wherein the one or more opening surfaces of the housing comprise main surfaces of the housing opposite to each other, and the first inorganic plate and the second inorganic plate are provided at the each opening surface of the housing.

11. The battery pack according to any one of claims 1 to 10, wherein
intervals between the first through-holes are two times or more and ten times or less an inner diameter of the first through-holes, and
intervals between the second through-holes are two times or more and ten times or less an inner diameter of the second through-holes.

12. The battery pack according to any one of claims 1 to 11, wherein the first through-holes and the second through-holes have diameters ranging from 0.5 mm to 2 mm.

13. The battery pack according to any one of claims 1 to 12, wherein the first inorganic plate and the second inorganic plate are made of metal plates.
